(19) Europäisches Patentamt
European Patent Office
Office européen des brevets

(11) EP 1 097 958 A1

(12) EUROPEAN PATENT APPLICATION

(43) Date of publication:
**09.05.2001 Bulletin 2001/19**

(51) Int Cl.[7]: **C08G 77/50**

(21) Application number: **99402728.2**

(22) Date of filing: **03.11.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Daikin Industries, Limited**
**Osaka-shi, Osaka 530-0015 (JP)**

(72) Inventors:
- **Boutevin, Bernard**
  **34000 Montpellier (FR)**
- **Caporiccio, Gérardo**
  **20149 Milan (IT)**
- **Guida-Pietrasanta, Francine**
  **34090 Montpellier (FR)**
- **Ratsimihety, Amédée,**
  **6, Rés. Belv. Garrigues Bt.B3**
  **34080 Montpellier (FR)**

(74) Representative: **Nevant, Marc et al**
**Cabinet Beau de Loménie,**
**158, rue de l'Université**
**75340 Paris Cedex 07 (FR)**

# (54) Fluoroelastomers for a wide temperature range of applications

(57) The present invention relates to hybrid fluorinated siloxane compounds of formula :

$$HSiR^1R^2(OSi\ R^1R^2)_m[C_nH_{2n}\text{-}R_F\text{-}C_nH_{2n}\text{-}SiR^1R^2(OSi\ R^1R^2)_m]_wH \quad (I)$$

$$AO\{SiR^1R^2(OSiR^1R^2)_m\text{-}[C_nH_{2n}\text{-}R_F\text{-}C_nH_{2n}SiR^1R^2(OSiR^1R^2)_m]_wO\}_yA \quad (V)$$

or

$$AO\{SiR^1R^2(OSiR^1R^2)C_nH_{2n}R_FC_nH_{2n}SiR^1R^2(OSiR^1R^2)O\}_w(SiR^1R^2C_nH_{2n}R_FC_nH_{2n}SiR^1R^2\text{-}O)_s\text{-}(SiR^1R^2O)_zA \quad (IX)$$

in which $R^1$, $R^2$, $R_F$, A, m, n, s, w, y and z are as defined in the specification. The invention also relates to the method of obtaining these compounds and to manufactured articles made of said compounds.

The compounds of the invention exhibit elastomer properties and can be applied in a wide range of temperature.

EP 1 097 958 A1

## Description

### Field of the invention

The present invention relates to fluorinated elastomers apt to be applied in a wide range of temperature (WTFE), to methods of obtaining them and to materials made of said elastomers.
The fluorinated elastomers of the invention exhibit good flexibility at temperatures below -40°C and very good thermoresistance at temperatures above 200-250°C.
The methods of the invention allow to obtain polymeric structures where sequences of fluorinated alkylene groups, represented by the formula R, are alternated with sequences of disubstituted sila-siloxane groups, represented by the formula $-Si(OSi)_n-$ where n is the integer one, two or three, and Si stands for a disubstituted silicon group.
In particular, the most simple structures of such polymers contain the repeating units :

$$-[RSiOSi]- \quad (1)$$

$$-[RSiOSiOSi]- \quad (2)$$

$$-[RSiOSiOSiOSi]- \quad (3)$$

said polymers being here intended to correspond to the class of hybrid silalkylene siloxane polymers (or "Hybrid Silicones").

### Background of the invention

Fluorinated hybrid silicones, such as those represented by the formula :

$$-[SiR^1R^2-R_F-SiR^1R^2O]_1-$$

have been described e.g. by B.Boutevin et al. (Recent Res. Develop. in Polymer Science, 1, 241-248, 1997) and were obtained by hydrosilylation of telechelic unsaturated dienes such as those of the formula $H_2C=CH-R_F-CH=CH_2$.
Moreover, US patent n° 5,527,933 describes a method where a diene (A) is silylated with a dihydrosilane $R^1R^2SiH_2$ to obtain the hybrid silane (B):

$$C_nH_{2n-1}R\ C_nH_{2n-1} \quad (A)$$

$$HSiR^1R^2-C_nH_{2n}-R-C_nH_{2n}-SiR^1R^2H \quad (B)$$

where $R^1$ and $R^2$ are e.g. a $(C_1-C_{12})$alkyl or a monovalent radical derived from a (co)telomer of fluorinated olefins.
The diene of formula (A) contains the group R which is a telomer or cotelomer known in the art and prepared e.g. as described in US patent n° 5,110,973.
The fluorinated hybrid telechelic silane (B) is further converted to telechelic bis silanol (C) by oxidative hydrolysis catalyzed by $Pd/Al_2O_3$ in the presence of $NaH_2PO_4$ buffered aqueous solution

$$HO(SiR^1R^2-C_nH_{2n}-R-C_nH_{2n}SiR^1R^2O)H \quad (C)$$

which in turn is polymerized in the presence of a catalyst such as e.g. tetramethylguanidine trifluoroacetate.
The polyaddition of a polyhydrosiloxane to polyvinyl or to polyunsaturated organic compounds - or polymers containing reactive double bonds - is a well known process reported e.g. by B. Marciniec in "Comprehensive Handbook of Hydrosilylation" Pergamon Press pp.187-191, C.M.Lewis and L.J. Mathias in Polymer Preprints, 34, (1), 491-492 (1993), P.R.Dvornic et al. in Macromolecules, 27, 7575-7580 (1994), and used also in the curing of the commercial

organosilicones containing vinyl groups by the action of heat in the presence e.g. of Pt-, Pd-, or Ni-based catalysts.

Description of the invention

The present invention relates to fluorinated hybrid silicones which contain one of the repeating units :

$$-RSiOSi- \qquad (1)$$

$$-RSiOSiOSi- \qquad (2)$$

$$-RSiOSiOSiOSi- \qquad (3)$$

where R is a group represented by the formula $-C_nH_{2n}-R_F-C_nH_{2n}-$ in which $R_F$ is as defined below.

According to a first feature, the present invention provides fluorinated hybrid silicones with lower Tg than the previous hybrid silicones, such as those described in US patent n° 5,527,933, while excelling in thermoresistance properties at temperatures above 200-250°C.

The invention also makes it possible to obtain hybrid fluorinated silicones with a sequencing number of SiO linkages less than four (i.e. a number of Si atoms less than five) that avoids possible depolymerization under thermal stress to cyclotrisiloxane D3 and cyclotetrasiloxane D4.

According to another feature, the invention makes it possible to synthesize hydrosilane telechelic polysiloxanes, without obtention of any cycles, by controlled step catalyzed and buffered (co)hydrolysis of dialkyl dihydrosilanes.

Thus, the present invention relates to a hybrid α,ω-dihydrosilane organosiloxane of formula (I)

$$HSiR^1R^2(OSi\ R^1R^2)_m[C_nH_{2n}-R_F-C_nH_{2n}-SiR^1\ R^2(OSi\ R^1R^2)_m]_wH \qquad (I)$$

in which:

- $R^1$ is methyl or phenyl,
- $R^2$ is methyl, $C_2H_4CF_3$ or $C_2H_4C_4F_9$,
- $R_F$ is a linear or branched fluorinated alkylene group of formula (II)

$$-(C_2H_2F_2)_t-(R^3CF-CF_2)_q-R'_F-(CF_2-CFR^3)_q-(C_2H_2F_2)_t- \qquad (II)$$

  in which:

  - $R^3$ is a fluorine atom or a trifluoromethyl,
  - $R'_F$ is a $(C_2-C_6)$perfluoroalkylene,
  - q and t are numbers such that the sum of all q and t is a number from 2 to 12,

- m is 1, 2 or 3,
- n is 2 or 3, and
- w is a number from 1 to 20, preferably from 1 to 12.

Compound (I) has the repeating unit $-[C_nH_{2n}R_FC_nH_{2n}-SiR\ ^1R^2(OSiR^1R^2)_m]-$ corresponding to the formulae (1), (2) and (3) mentioned above when m is 1, 2 or 3, respectively.

In the compounds of formula (I), a preferred group $R_F$ is represented by formulae (IIa) and (IIb)

$$-((CF_3)CF-CF_2)_q-R'_F-(CF_2-CF(CF_3))_q- \qquad (IIa)$$

in which q is 1 or 2,

$$-(C_2H_2F_2)_t-((CF_3)CF-CF_2)_q-R'_F-(CF_2-CF(CF_3))_q-(C_2H_2F_2)_t- \quad \text{(IIb)}$$

in which q is 0, 1, 2 or 3 and t is 1, 2 or 3.

Among the compounds of formula (II), those where $R'_F$ is $C_4F_8$ or $C_6F_{12}$ are especially preferred.

The compounds of formula (I) can be prepared by a two-step method comprising :

1/ reacting a dihydrosiloxane organosiloxane of formula (III)

$$HSiR^1R^2(OSiR^1R^2)_m\,H \quad \text{(III)}$$

in which $R^1$, $R^2$ and m are as defined above,
with a diene of formula (IV)

$$CH_2{=}CH-(CH_2)_r-R_F-(CH_2)_r-CH{=}CH_2 \quad \text{(IV)}$$

in which $R_F$ is as defined above and r is 0 or 1,
in the presence of a catalyst and with a molar ratio (III) : (IV) in the range from 1.01 to 1.10, and
2/ reacting the resulting polymeric compound with another organosiloxane (III) as defined above, in the presence of the same catalyst as in step 1/.

Step 1/ is a controlled polyhydrosilylation while step 2/ allows to fully convert the polymeric compound obtained in step 1/ into compound (I).

The catalyst used in the above method can be any catalyst conventionally used in the hydrosilylation reaction, such as for example Platinum-, Palladium-, Rhodium- or Nickel-based catalysts. A platinum-based catalyst, such as Karstedt catalyst (Pt/DiVinylTetraMethylDiSiloxane, hereafter abbreviated to Pt/DVTMDS) is especially advantageous.

The above reaction steps are in general carried out at a temperature in the range of from 60 to 110°C.

This method is especially advantageous when starting reagents (III) where $R^2$ is $C_2H_4CF_3$ or $C_2H_4C_4F_9$ are liquid while the commercial products where $R^1 = R^2 = CH_3$ are gaseous and flammable reagents.

The invention further relates to an hybrid sila-polysiloxane of formula (V)

$$AO\{SiR^1R^2(OSiR^1R^2)_m-[C_nH_{2n}-R_F-C_nH_{2n}SiR^1R^2(OSiR^1R^2)_m]_wO\}_yA \quad \text{(V)}$$

in which:

- $R^1$ is methyl or phenyl,
- $R^2$ is methyl, $C_2H_4CF_3$ or $C_2H_4C_4F_9$,
- $R_F$ is a linear or branched fluorinated alkylene group of the formula (II)

$$-(C_2H_2F_2)_t-(R^3CF-CF_2)_q-R'_F-(CF_2-CFR^3)_q-(C_2H_2F_2)_t- \quad \text{(II)}$$

in which :

- $R^3$ is a fluorine atom or a trifluoromethyl,
- $R'_F$ is a $(C_2-C_6)$perfluoroalkylene,
- q and t are numbers such that the sum of all q and t is a number from 2 to 12,

- m is 1, 2 or 3,
- n is 2 or 3,
- w is a number from 1 to 100, preferably from 1 to 20,
- y is a number from 1 to 10, and
- A is hydrogen or a group $-SiR^1R^{2a}R^{3a}$ in which $R^{2a}$ is a methyl, a vinyl or a $(C_3-C_6)$alkenyl, and $R^{3a}$ is $R^1$, $R^2$ or a vinyl.

A preferred compound of formula (V) is the one where each A represents a group $-SiR^1R^{2a}R^{3a}$ in which $R^{3a}$ is vinyl.

Other preferred compounds (V) include those where $R_F$ and $R'_F$ are as defined above for the compounds (I).

The compounds of formula (V, A = H, y = 1) can be obtained by catalyzed oxidizing hydrolysis of the compounds of formula (I), preferably by means of $Pd/Al_2O_3$ in the presence of buffered $NaH_2PO_4$ aqueous solution, and subsequently said compounds (V, A = H, y = 1) or their polycondensation polymeric compounds (y = 2 -10) can be end-capped with a group $-SiR^1R^{2a}R^{3a}$.

According to an alternative embodiment of the invention, when reacting an organosiloxane (III) where m is 1 with a diene (IV) in a molar ratio (III) : (IV) of about 2:1 in the presence of a catalyst such as those described above for the obtention of compound (I), the resulting compound (I) can be converted to bis silanol (V', w = 1) by oxiding hydrolysis, catalyzed preferably by $Pd/Al_2O_3$ in the presence of $NaH_2PO_4$ buffered aqueous solution.

$$HO[SiR^1R^2(OSiR^1R^2)C_nH_{2n}RC_nH_{2n}SiR^1R^2\ (OSiR^1R^2)O]_w\ H \qquad (V')$$

The bis silanol (V', w = 1) can in turn be polymerized in the presence of tetramethylguanidine trifluoroacetate or condensed with dichlorodialkylsilane (VI) or monochlorotrialkylsilane (VII) or $\alpha,\omega$-dichloro silalkylene silane (VIII) :

$$R^1R^{2a}SiCl_2 \qquad (VI)$$

$$R^1R^{2a}R^{3a}SiCl \qquad (VII)$$

$$ClR^1R^2SiC_nH_{2n}R_FC_nH_{2n}SiR^1R^2Cl \qquad (VIII)$$

in which :

- $R^{2a}$ is a methyl, a vinyl or a $(C_3-C_6)$alkenyl,
- $R^{3a}$ is $R^1$, $R^2$ or a vinyl, and
- $R^1$, $R^2$, $R_F$ and n are as defined above,

to give the hybrid silicone of formula (IX)

$$AO\{SiR^1R^2(OSiR^1R^2)C_nH_{2n}R_FC_nH_{2n}SiR^1R^2(OSiR^1R^2)O\}_w(SiR^1R^2C_nH_{2n}R_FC_nH_{2n}\ SiR^1R^2O)_s-(SiR^1R^2O)_z\ A$$

(IX)

in which :

- $R^1$ is methyl or phenyl,
- $R^2$ is methyl, $C_2H_4CF_3$ or $C_2H_4C_4F_9$,
- $R_F$ is a linear or branched fluorinated alkylene group of the formula (II)

$$-(C_2H_2F_2)_t-(R^3CF-CF_2)_q-R'_F-(CF_2-CFR^3)_q-(C_2H_2F_2)_t- \qquad (II)$$

in which:

  - $R^3$ is a fluorine atom or a trifluoromethyl,
  - $R'_F$ is a $(C_2-C_6)$perfluoroalkylene,
  - q and t are numbers such that the sum of all q and t is a number from 2 to 12,

- A is hydrogen or a group $-SiR^1R^{2a}R^{3a}$ in which $R^{2a}$ is a methyl, a vinyl or a $(C_3-C_6)$alkenyl and $R^{3a}$ is $R^1$, $R^2$ or a vinyl,
- m is 1, 2 or 3,

- n is 2 or 3,
- w is a number from 1 to 100, preferably from 1 to 20, and
- s and z are numbers such that $0 < \frac{s+z}{w} < 0.1$, the ratio $\frac{s}{z}$ being preferably equal to 2.

The dihydrosilane organosiloxanes of formula (III), which constitute an object of the present invention as intermediate for the preparation of compounds (I), can be obtained by oxidizing hydrolysis of a silane $SiR^1R^2H_2$, preferably catalyzed by $Pd/Al_2O_3$ in the presence of buffered $NaH_2PO_4$ aqueous solution, and if necessary, subsequent distillation of the resulting product. In this respect, the compounds of formula (III) are novel except when $R^2$ is methyl.

The dienes of formula (IV) are either commercially available or prepared by known methods, e.g. the method described in US patent N° 5,110,973.

The polymeric hybrid fluorosilicones of the invention can be crosslinked into elastomers that combine a good flexibility at temperatures below -40°C and good or very good thermoresistance at temperatures of at least 200°C.

In particular, the fluoroelastomers of the invention where m is 1 show flexibility at a temperature of -40°C and excellent thermoresistance at a temperature of 250°C or at higher temperatures. The fluoroelastomers where m is 2 show flexibility at a temperature of -50°C, or lower, and a good thermoresistance at temperatures higher than 200°C. The fluoroelastomers where m is 3 show flexibility at a temperature of -65°C, and a good thermoresistance at temperatures around 200°C.

According to an embodiment of the invention, compound (I) can be crosslinked with a polyvinyl or a polyallylsilane such as $(CH_2{=}CH)_2Si(CH_3)_2$ or $(CH_2{=}CH\text{-}CH_2)_iSi(CH_3)_{4-i}$ in an amount of up to 2 wt% and in the presence of an amount of about 0.005 to 0.1 wt% of a platinum-based catalyst, both based on the hybrid polysiloxane.

The crosslinking reaction is initiated by a catalyst such as e.g. a platinum or palladium catalyst at a temperature from about 60°C to 120°C.

The hybrid polysiloxanes (V) and (IX) containing units of the type $-SiR^1R^{2a}O$, where $R^{2a}$ is a vinyl group, along the chain and/or terminal groups of the type $-SiR^1R^{2a}R^{3a}$, where $R^{2a}$ is a vinyl group, can be crosslinked by the action of a peroxide such as e.g. 2,5-dimethyl-2,5-di(terbutylperoxy)hexane (or hex-3-yne), or dicumyl peroxide, in the presence or not of a triallylisocyanurate, at a temperature in the range of about 130-175°C followed by postcuring at a temperature of about 170-220°C. The content of vinyl groups is from 1 to 10 units for one hundred siloxane units.

As alternative way of crosslinking, the hybrid polysiloxanes (V) and (IX) containing vinyl groups along the chain and/or as terminal groups, are blended with polyhydrosilanes of formula $(CH_3)_3SiO[Si(H)R^2O]_xSi(CH_3)_3$, where $R^2$ is as defined above and x is a number from 1 to 50, preferably from 20 to 40, in an amount of 0.5 to 5 wt%, in the presence of 0.005 to 0.1 wt% of a platinum-based catalyst, based on the hybrid polysiloxane.

After such crosslinking, the reinforced elastomers present a tensile strength in the range of about 80-200 kg/$cm^2$, an elongation at break of about 100-500%, a glass transition temperature in the range of about -70°C to -15°C, preferably from about -60°C to -25°C.

The compounds of the invention can be formulated in compositions comprising about one hundred parts of hybrid fluorosilicone with up to 35 parts of fillers comprising one or more of the following agents: silica or fumed silica, carbon black preferably Medium Thermal MT®, Litharge, $Fe_2O_3$, ZnO.

When the ingredients (such as the hybrid fluorosilicones, polyvinylsilanes, polyhydrosilane silicones, catalysts, fillers) are handled as viscous liquids, pastes or suspensions, they can be pumped, sprayed, brushed, dip-coated, rolled and optionally crosslinked to obtain manufactured articles such as coatings, hoses, orings, seals, membranes and films.

In particular, when the fillers are used in an amount of about 10-35 wt%, the composition can be moulded under the plates of a press.

The applications of the manufactured articles of the invention concern the aeronautic, automotive and mechanical industries as e.g. hoses, o-rings, seals, membranes, adhesives, resistant to fuels, oils, steam, at temperature of between -40°C, or below, to 200°C or above.

Moreover, other applications concern the electronic industry for e.g. cable jacketing, junction coatings, rollers for photocopy machines, membranes or binders for electrical batteries.

The following examples illustrate the invention without implying a limitation. In these examples, the following abbreviations are used :

DVTMDS : divinyltetramethyldisiloxane
HFP : hexafluoropropylene
NMR : nuclear magnetic resonance
FT-IR : Fourier transform - infra red
Tg : glass transition temperature
Vi: vinyl
VDF : vinylidene fluoride

GPC : gel permeation chromatography
DSC : differential scanning calorimetry
$TMG/CF_3CO_2H$ : tetramethylguanidine trifluoroacetate

Reference example

**General synthesis of $H_2C{=}CHR_FCH{=}CH_2$ + $H\text{-}(SiR^1R^2O)_mSiR^1R^2\text{-}H$**

$10^{-3}$ mole of diene were reacted with 1 to 1.5 $10^{-3}$ mole of dihydrosiloxane, in bulk or in a small amount of toluene, in the presence of Karstedt catalyst (Pt/DVTMDS). Depending on the nature of the dihydrosiloxane, the reaction was performed either in a flask under a nitrogen atmosphere or in a reactor placed under an initial nitrogen pressure. The mixture was heated at 60 to 120°C during 5 hours to 5 days.
Then, when the ratio dihydrosilane/diene is lower than 1.1 or when the dihydrosilane is very volatile in the way that makes uncertain its concentration in the liquid phase at high temperature, the resulting telomer is reacted with a further dose of hydrosilane under the same conditions
After cooling and elimination of toluene and the excess dihydrosiloxane, the mixture was diluted with ether. Carbon black was added and the mixture was filtered over sodium sulfate to eliminate any trace of catalyst. Then the ether solution was concentrated.

Examples 1 to 3

**$H_2C{=}CHCH_2/HFP/C_4F_8/HFP/\ CH_2CH{=}CH_2$ + $H\text{-}(SiMe_2O)SiMe_2\text{-}H$**

11.073g (19.0 $10^{-3}$ mol) of diene $H_2C{=}CHCH_2/HFP/C_4F_8/HFP/\ CH_2CH{=}CH_2$ and 3.368g (25.1 $10^{-3}$ mol) of 1,1,3,3-tetramethyldisiloxane were placed in a reactor with 80% weight toluene in the presence of Karstedt catalyst (Pt/DVTMDS). The reactor was placed under a nitrogen initial pressure of 7 bars.
The hydrosilylation was carried out at 90°C during 4 days.
After cooling, the crude mixture was treated as described in the reference example and after ether evaporation, the expected corresponding oligo α,ω-disilane I (m = 1) was obtained (w = 3.4 calculated from $^1H$ NMR).
FT.-I.R: 2135 $cm^{-1}$ for *v* (Si-H)
$^1H$ NMR ($CDCl_3$): 0.48-0.99 [m. $CH_2\ Si(\underline{CH_3})_2\ O\ Si(\underline{CH_3})_2CH_2$]; 0.165 [d. $HSi(\underline{CH_3})_2OSi$]; 0.575 [$OSi(CH_3)_2\underline{CH_2}$]; 1.65 [$Si(CH_3)_2CH_2\underline{CH_2}$]; 2.17
[$CH_2CH_2\underline{CH_2},CF(CF_3)$]; 4.69 [$\underline{H}Si(CH_3)_2O$]
$^{19}F$ NMR ($CDCl_3/CFCl_3$): -75 [$(C\underline{F_3})CF$]; -118 [$(CF_3)CFC\underline{F_2}$]; -121 [$(CF_3)CFCF_2C\underline{F_2}$];.-122 [$(CF_3)CFCF_2CF_2C\underline{F_2}$]; -182 [$(CF_3)C\underline{F}$]
$^{29}Si$ NMR ($CDCl_3$): +9.9[$HSi(CH_3)_2O\underline{Si}(CH_3)_2$]; +7.5
[$CH_2O\underline{Si}(CH_3)_2O\underline{Si}(CH_3)_2OCH_2$]; -6.0 [$H\underline{Si}(CH_3)_2OSi(CH_3)_2$]
DSC: $T_g$ = - 62°C
Besides this example, two other dihydro oligosiloxanes were prepared with w = 6.7 and 11 and their respective $T_g$s were measured:
w = 6.7  Tg = -54°C
w = 11  Tg = -50°C
The dihydro oligosiloxane with w = 11 was mixed with a vinyl containing hybrid siloxane type of the formula $(Vi\ SiOSiC_2H_4C_6F_{12}C_2H_4SiO)_2Si(Me)(Vi)$ in order to have about 3% vinyl content in excess, then charged with Carbon MT® (20 parts for 100 parts of oligosiloxane containing 3% vinyl), 2,5 dimethyl - 2,5-di(terbutylperoxy) hex-3-ene (Varox®) (0.6 part) and vulcanized (5 hrs at 170°C).
A rubber was obtained with a tensile strength of about 180kg/$cm^2$ and an elongation of 250 %.

Example 4

**$H_2C{=}CHCH_2/[(VDF)_{4.6}(C_3F_6)_2C_4F_8]/\ CH_2CH{=}CH_2$ + $H\text{-}(SiMe_2O)_1SiMe_2\text{-}H$**

The procedure of examples 1-3 is repeated, in a reactor under a nitrogen initial pressure of 7 bars, but using 7.9g (9 $10^{-3}$ mol) of diene $H_2C{=}CHCH_2/[(VDF)_{4.6}(C_3F_6)_2C_4F_8]/\ CH_2CH{=}CH_2$ and 1.31g (9.8 $10^{-3}$ mol) of tetramethyldisiloxane.
The dihydro oligosiloxane I (m = 1) obtained was analyzed by NMR and from GPC its $M_w$ was evaluated at 13000 (w = 15)
$^1H$ NMR ($CDCl_3$): 0.1 $\underline{CH_3}SiO$; 0.4-0.6 $\underline{CH_2}SiO$; 1.35-1.7 $CH_2\underline{CH_2}CH_2$; 1.8-2.1 $\underline{CH_2}R_F$; broad signal from 2.4 to 3.1

$\underline{CH_2}$ from VDF part
$^{19}F$ NMR ($CDCl_3/CFCl_3$): $CH_2$ [$CH_2$ $CF_2$] [CF ($CF_3$)] $CF_2$ $CF_2$ $CF_2$ $CF_2$ $CH_2$ main signals -90,-95 -185 -70,-75 -122 -121 -121 -118
$^{29}Si$ NMR ($CDCl_3$): +7.5
DSC: $T_g$ = - 39°C

Example 5

**$H_2C=CHCH_2/HFP/C_4F_8/HFP/\ CH_2CH=CH_2$ + H-$(SiMe_2O)_2SiMe_2$-H**

Following the procedure of the reference example 9.9g (17 $10^{-3}$mole) of diene and 4.8g (23 $10^{-3}$ mole) of hexamethyl trisiloxane (from ABCR) were placed in a three necked flask under nitrogen in the presence of Pt/DVTMDS and the mixture was heated at 60°C for 5 hours.

After usual treatment, the corresponding oligosiloxane I (m = 2) was obtained with w = 4.2 from $^1H$ NMR ($M_w$ = 3500)
FT.I.R: 2124 $cm^{-1}$ (*v* Si-H)
$^1H$ NMR ($CDCl_3$): m from 0 to 0.15 [$OSi(C\underline{H}_3)_2O$]; m centered at 0,19 [$OSi(C\underline{H}_3)_2H$]; m centered at 0.6 ($C\underline{H}_2Si$); m centered at 1.65 ($C\underline{H}_2CH_2Si$); m centered at 2.2 ($C\underline{H}_2$/HFP); m centered at 4.75 ($Si\underline{H}$)
$^{19}F$ NMR ($CDCl_3/CFCl_3$): -75 [$(C\underline{F}_3)CF$]; -118 [$(CF_3)CFC\underline{F}_2$]; -121 [$(CF_3)CFCF_2C\underline{F}_2$];.-122 [$(CF_3)CFCF_2CF_2C\underline{F}_2$]; -182 [$(CF_3)C\underline{F}$]
$^{29}Si$ NMR ($CDCl_3$): +7 internal $CH_2\underline{Si}OSi$; -6.6 terminal $O\underline{Si}H$; -18.7 terminal $O\underline{Si}OSiH$; -19.9 internal $CH_2SiO\underline{Si}OSiCH_2$
DSC: $T_g$ = - 67°C

To the obtained oligosiloxane were added 15-20 wt% Carbon MT, $(CH_2=CH)_3SiMe$, Pt $10^{-4}$ molar 100 ppm and crosslinking was performed (5 hrs at 100°C under a pressure of 100 $kg/cm^2$).
The moulded product is resistent to traction and shows an elongation of 200%.

Example 6

**Synthesis of $HSi(CH_3)(C_2H_4C_4F_9)OSi(CH_3)(C_2H_4C_4F_9)H$ (1,3-Dihydro 1,3-dimethyl 1,3-dinonafluorohexyl disiloxane)**

0.025 mole (7.3g) of $C_4F_9C_2H_4Si(CH_3)H_2$ (prepared by reduction of the corresponding dichlorosilane with $AlLiH_4$) was hydrolyzed by 0.011 mole of water coming from 0.2mL of a buffered solution of $NaH_2PO_4$ diluted in 12.5 mL of dioxane and in the presence of 0.125g of $Pd/Al_2O_3$.The reaction was performed at room temperature for 2 hours. After distillation of the crude product, dihydrodisiloxane $[HSi(CH_3)(C_2H_4C_4F_9)]_2O$ was obtained.
Yield = 80% bp = 146°C (40 mm Hg) or 114°C (20 mm Hg)
FT.I.R: 2137 $cm^{-1}$ (v Si-H)
$^1H$ NMR ($CDCl_3$): 0.25 (d, 3H) $\underline{CH_3}$ Si; 0.90 (m, 2H) $\underline{CH_2}$Si; 2.1 (m, 2H) $\underline{CH_2}CF_2$; 4.7 (1H) Si$\underline{H}$
$^{19}F$ NMR ($CDCl_3/CFCl_3$): -81.7 $\underline{CF_3}CF_2$; -116.8 $CH_2\underline{CF_2}CF_2$; -125 $CF_3CF_2\underline{CF_2}CF_2$;-126.7 $CF_3\underline{CF_2}CF_2$
$^{29}Si$ NMR ($CDCl_3$): -2.25 s. when $^1H$ are irradiated and d. $^1J$(Si-H) = 179 Hz without irradiation

Example 7

**$H_2C=CHCH_2/HFP/C_4F_8/HFP/CH_2CH=CH_2$ + dihydrodisiloxane of example 6**

Following the procedure of the reference example 5.24g (9 $10^{-3}$mol) of diene and 5.86g (9.8 $10^{-3}$ mol) of the disiloxane of example 6 were placed in a three necked flask under nitrogen in the presence of Pt/DVTMDS and the mixture was heated at 60°C for 5 hours.
After usual treatment, the corresponding oligosiloxane I (m = 1) was obtained.
w = 12 (Mw = 14 000 from GPC)
$^1H$ NMR ($CDCl_3$): 0.15 $\underline{CH_3}$SiO; 0.6-1 $\underline{CH_2}$SiO; 1.4-1.9 $CH_2\underline{CH_2}CH_2$; 1.9-2.3 $\underline{CH_2}R_F$ $^{19}F$ NMR ($CDCl_3/CFCl_3$): backbone [$CH_2$ CF ($CF_3$) $CF_2$ $CF_2$ $CF_2$ ]$_2$;
-182 -75 -118 -121 -122
pendant chain $CF_3$ $CF_2$ $CF_2$ $CF_2$ $CH_2$
-81 -126 -125 -117
$^{29}Si$ NMR ($CDCl_3$): + 8.3
DSC: $T_g$ = -40°C

Example 8

**$H_2C=CHCH_2/TFE/VDF/HFP/CH_2CH=CH_2$ + dihydrodisiloxane of example 6**

The procedure of example 7 was repeated : 9 $10^{-3}$moles (3.35g) of diene and 9.8 $10^{-3}$ moles (5.86g) of the disiloxane of example 6 were placed in a three necked flask under nitrogen in the presence of Pt/DVTMDS and the mixture was heated at 60°C for 5 hours.

After usual treatment, the corresponding oligosiloxane I (m = 1) was obtained. w = 13 (Mw = 12 500 from GPC)

$^1H$ NMR ($CDCl_3$): 0.15 $CH_3$ SiO; 0.5-0.9 $CH_2SiO$; 1.4-1.8 $CH_2CH_2CH_2$; 1.9-2.3 $CH_2R_F$; q centered at 2.8 $CH_2$ from VDF

$^{19}F$ NMR ($CDCl_3/CFCl_3$): backbone $CH_2$ $CF_2$ $CF_2$ $CF_2$ $CH_2$ $CF_2$ CF ($CF_3$) $CH_2$

-112 -118 -114 -115 -182 -75

pendant chain $CF_3$ $CF_2$ $CF_2$ $CF_2$ $CH_2$

-82 -126 -124 -116

$^{29}Si$ NMR ($CDCl_3$): + 8.3

DSC: $T_g$ = - 45°C

Example 9

**Synthesis of a hybrid fluorosilicone containing 2% vinyl pendant groups and terminated Si-vinyl**

The α,ω- bis chloro compound $[Cl(CH_3)(C_2H_4CF_3)Si\text{-}C_2H_4\ (CF_2)_3]_2$ was hydrolyzed in the presence of $NaHCO_3$ into the corresponding bis silanol $[HO\ (CH_3)(C_2H_4CF_3)Si\text{-}C_2H_4(CF_2)_3]_2$.

1 mole of this bis silanol was reacted with 2.02 moles of vinyl dichloromethyl silane in the presence of $Et_3N$ to give the comonomer $[HO(CH_3)(C_2H_4CF_3)Si\text{-}C_2H_4\ (C_6F_{12})C_2H_4SiO]_2Si\ (CH_3)(CH=CH_2)$ which contains 1 vinyl/2 hybrid moieties, i.e.50% vinyl.

FT.I.R: 3684 $cm^{-1}$ ($v$ Si-OH free), wide band between 3000 and 3700 ($v$ Si-OH bonded); 1599 $cm^{-1}$($v$ Si-Vi) $^1H$ NMR ($CDCl_3$): 0.15-0.30 $CH_3$ Si; 0.70-1.0 $CH_2Si$; 1.8-2.3 $CH_2CF_2$; 5.7-6.1 $CH=CH_2$

$^{19}F$ NMR ($CDCl_3/CFCl_3$): -68 $CF_3CH_2$; -116.8 $CH_2CF_2CF_2$; -122.5 $CH_2CF_2CF_2CF_2$;-124 $CH_2CF_2CF_2CF_2$

Then, 1 mole of this comonomer was reacted with 48 moles of the α,ω-bis chloro compound $Cl(CH_3)_2SiC_3H_6$/HFP/$C_4F_8$/HFP/ $C_3H_6Si(CH_3)_2Cl$ (issued from hydrosilylation of $H_2C=CHCH_2$/HFP/$C_4F_8$/HFP/ $CH_2CH=CH_2$ with dimethyl chlorosilane) in the presence of $Et_3N$, followed by hydrolysis and polycondensation with TMG/$CF_3CO_2H$ as catalyst. Finally, the α,ω-bis hydroxy polymer was end-capped with vinyl phenyl methyl chlorosilane to give

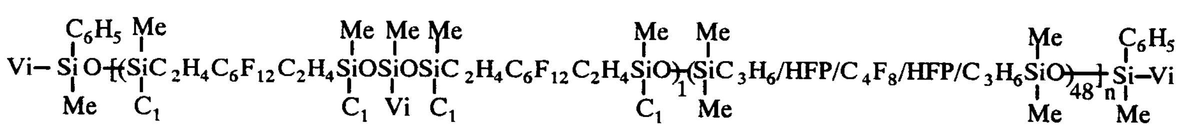

$C_1 = C_2H_4CF_3$

HFP = $-CF(CF_3)CF_2-$

FT.I.R: no more $v$ Si-OH; 1596 $cm^{-1}$ ($v$ Si-Vi)

$^1H$ NMR ($CDCl_3$): -0.05-0.25 $CH_3$ SiO; 0.4-0.65 $CH_2SiO$; 1.5-2-1.75 $CH_2CH_2SiO$; 1.9-2.3 $CH_2CH_2CH_2SiO$; 5.6-6.5 $CH=CH_2$; 7.3-7.6 $C_6H_5$

$^{19}F$ NMR ($CDCl_3/CFCl_3$): -68(small) $CF_3CH_2$;-74.5 ($CF_3$)CF; -116.8 (small) $CH_2CF_2$ from $C_6F_{12}$; -118.5 $CF_2$ from HFP ;-121 and -122.5 internal $CF_2$ from $C_4F_8$ and $CH_2CF_2CF_2CF_2$ from $C_6F_{12}$; -124 (small) $CH_2CF_2CF_2CF_2$ from $C_6F_{12}$

100 parts of this final product were mixed with 17 parts of fumed silica or MT®, 2 parts of Varox® and cured at 170°C for 5 hrs, followed by postcuring during 2 hrs at 200°C to achieve crosslinking.

Example 10

**Synthesis of $H[Si(CH_3)(C_2H_4C_4F_9)O]_2Si(CH_3)(C_2H_4C_4F_9)H$ (1,5-Dihydro 1,3,5-trimethyl 1,3,5-trinonafluorohexyl trisiloxane)**

3.65g (0.0125 mol) of $C_4F_9C_2H_4Si(CH_3)H_2$ (prepared by reduction of the corresponding dichlorosilane with $AlLiH_4$) was hydrolyzed by 0.011 mole of water coming from 0.2mL of a buffered solution of $NaH_2PO_4$ diluted in 12.5 mL of dioxane and in the presence of 0.125g of $Pd/Al_2O_3$ (5%).The reaction was performed at 30°C for 24 hours. After cooling, the reaction mixture was diluted by 20mL of dioxane and dried over $Na_2SO_4$. Distillation of the crude product

gave a first fraction of dihydrodisiloxane $[HSi(CH_3)(C_2H_4C_4F_9)]_2O$ identical to the product obtained in example 6 [Yield = 50%, bp = 114°C (20 mm Hg)] and a second fraction of the expected trisiloxane $H[Si(CH_3)(C_2H_4C_4F_9)O]_2Si(CH3)(C_2H_4C_4F_9)H$. Yield = 40% bp = 140°C (20 mm Hg)
FT-I.R: 2137 $cm^{-1}$ (*v* Si-H)
$^1H$ NMR ($CDCl_3$): 0.1 (m, 3H) central $\underline{CH_3}$ Si; 0.25 (d, 6H) lateral $\underline{CH_3}$ Si; 0.80 (m, 2H) central $\underline{CH_2}Si$; 0.90 (m, 4H) lateral $\underline{CH_2}Si$; 2.1 (m, 6H) $\underline{CH_2}CF_2$; 4.7 (2H) Si$\underline{H}$ $^{19}F$ NMR ($CDCl_3/CFCl_3$): -81.5 $\underline{CF_3}CF_2$; -117 $CH_2\underline{CF_2}CF_2$; -125 $CF_3CF_2\underline{CF_2}CF_2$; - 126.5 $CF_3\underline{CF_2}CF_2$
$^{29}Si$ NMR ($CDCl_3$): -5.3 s. when $^1H$ are irradiated and d. $^1J(Si-H)$ = 198 Hz without irradiation; -18.6 (s) O$\underline{Si}$O or central Si.

Example 11

**$H_2C=CHCH_2/HFP/C_4F_8/HFP/\ CH_2CH=CH_2$ + dihydrotrisiloxane of example 10**

Following the procedure of example 7 9.89g (17 $10^{-3}$ mole) of diene and 20.79g (23 $10^{-3}$ mole) of dihydrotrisiloxane prepared according to the procedure described in example 10 were reacted in a three necked flask under nitrogen in the presence of Pt/DVTMDS, at 60°C for 5 hours, to give, after usual treatment, the corresponding oligosiloxane I where m = 2, w = 3.10 (measured by $^1H$ NMR), $R^1$ is methyl, $R^2$ is $C_2H_4C_4F_9$.

## Claims

**1.** A hybrid α,ω-dihydrosilane organosiloxane of formula (I)

$$HSiR^1R^2(OSi\ R^1R^2)_m[C_nH_{2n}\text{-}R_F\text{-}C_nH_{2n}\text{-}SiR^1R^2(OSi\ R^1R^2)_m]_wH \qquad (I)$$

in which :

- $R^1$ is methyl or phenyl,
- $R^2$ is methyl, $C_2H_4CF_3$ or $C_2H_4C_4F_9$,
- $R_F$ is a linear or branched fluorinated alkylene group of formula (II)

$$-(C_2H_2F_2)_t\text{-}(R^3CF\text{-}CF_2)_q\text{-}R'_F\text{-}(CF_2\text{-}CFR^3)_q\text{-}(C_2H_2F_2)_t\text{-} \qquad (II)$$

in which:

  - $R^3$ is a fluorine atom or a trifluoromethyl,
  - $R'_F$ is a ($C_2$-$C_6$)perfluoroalkylene,
  - q and t are numbers such that the sum of all q and t is a number from 2 to 12,

- m is 1, 2 or 3,
- n is 2 or 3, and
- w is a number from 1 to 20, preferably from 1 to 12.

**2.** The organosiloxane according to claim 1, in which $R_F$ is a group of formula (IIa) or (IIb) :

$$-\ ((CF_3)CF\text{-}CF_2)_q\text{-}R'_F\text{-}(CF_2\text{-}CF(CF_3))_q\text{-} \qquad (IIa)$$

in which q is 1 or 2,

$$-(C_2H_2F_2)_t\text{-}((CF_3)CF\text{-}CF_2)_q\text{-}R'_F\text{-}(CF_2CF(CF_3))_q\text{-}(C_2H_2F_2)_t\text{-} \qquad (IIb)$$

in which q is 0, 1, 2 or 3 and t is 1, 2 or 3.

**3.** The organosiloxane according to claim 1 or 2, in which $R'_F$ is $C_4F_8$ or $C_6F_{12}$.

**4.** A method of preparing the organosiloxane of claim 1, which comprises the steps of:

1/ reacting a dihydrosiloxane organosiloxane of formula (III)

$$HSiR^1R^2(OSiR^1R^2)_m H \quad (III)$$

in which $R^1$, $R^2$ and m are as defined in claim 1, with a diene of formula (IV)

$$CH_2{=}CH\text{-}(CH_2)_r\text{-}R_F\text{-}(CH_2)_r\text{-}CH{=}CH_2 \quad (IV)$$

in which $R_F$ is as defined in claim 1 and r is 0 or 1,
in the presence of a catalyst and with a molar ratio (III) : (IV) in the range from 1.01 to 1.10, and
2/ reacting the resulting polymeric compound with organosiloxane (III) as defined above, in the presence of the same catalyst as in step 1/.

**5.** The method according to claim 4, in which the catalyst is a Platinum-, Palladium-, Rhodium- or Nickel-based catalyst.

**6.** The method according to claim 5, in which the catalyst is a Platinum-based catalyst such as Pt/divinyltetramethyldisiloxane.

**7.** A hybrid sila-polysiloxane of formula (V)

$$AO\{SiR^1R^2(OSiR^1R^2)_m\text{-}[C_nH_{2n}\text{-}R_F\text{-}C_nH_{2n}SiR^1R^2(OSiR^1R^2)_m]_wO\}_yA \quad (V)$$

in which :

- $R^1$ is methyl or phenyl,
- $R^2$ is methyl, $C_2H_4CF_3$ or $C_2H_4C_4F_9$,
- $R_F$ is a linear or branched fluorinated alkylene group of the formula (II)

$$-(C_2H_2F_2)_t\text{-}(R^3CF\text{-}CF_2)_q\text{-}R'_F\text{-}(CF_2\text{-}CFR^3)_q\text{-}(C_2H_2F_2)_t\text{-} \quad (II)$$

in which :

  - $R^3$ is a fluorine atom or a trifluoromethyl,
  - $R'_F$ is a $(C_2\text{-}C_6)$perfluoroalkylene,
  - q and t are numbers such that the sum of all q and t is a number from 2 to 12,

- m is 1, 2 or 3,
- n is 2 or 3,
- w is a number from 1 to 100, preferably from 1 to 20,
- y is a number from 1 to 10, and
- A is hydrogen or a group $-SiR^1R^{2a}R^{3a}$ in which $R^{2a}$ is a methyl, a vinyl or a $(C_3\text{-}C_6)$alkenyl, and $R^{3a}$ is $R^1$, $R^2$ or a vinyl.

**8.** The hybrid sila-polysiloxane according to claim 7 in which each A is a group $-SiR^1R^{2a}R^{3a}$ where $R^{3a}$ is a vinyl.

**9.** The hybrid sila-polysiloxane according to claim 7 or 8 in which $R'_F$ is is a group of formula (IIa) or (IIb) :

$$-((CF_3)CF\text{-}CF_2)_q\text{-}R'_F\text{-}(CF_2\text{-}CF(CF_3))_q\text{-} \qquad \text{(IIa)}$$

in which q is 1 or 2,

$$-(C_2H_2F_2)_t\text{-}((CF_3)CF\text{-}CF_2)_q\text{-}R'_F\text{-}(CF_2\text{-}CF(CF_3))_q\text{-}(C_2H_2F_2)_t\text{-} \qquad \text{(IIb)}$$

in which q is 0, 1, 2 or 3 and t is 1, 2 or 3.

**10.** The hybrid sila-polysiloxane accroding to claim 9 in which $R'_F$ is $C_4F_8$ or $C_6F_{12}$.

**11.** A method of preparing the hybrid sila-polysiloxane of claim 7 which comprises the steps of

1/ carrying out the oxidizing hydrolysis of the organosiloxane of formula (I) as defined claim 1 in the presence of a catalyst,
2/ optionally polycondensing the resulting compound, and
3/ if necessary end-capping the compound obtained in step 1/ or 2/ with a group $-SiR^1R^{2a}R^{3a}$.

**12.** The method according to claim 11 in which the hydrolysis is catalyzed by $Pd/Al_2O_3$ in the presence of buffered $NaH_2PO_4$ aqueous solution.

**13.** A hybrid fluorosilicone of formula (IX):

$$AO\{SiR^1R^2(OSiR^1R^2)C_nH_{2n}R_FC_nH_{2n}SiR^1R^2(OSiR^1R^2)O\}_w(SiR^1R^2C_nH_{2n}R_FC_nH_{2n}$$
$$SiR^1R^2O)_s\text{-}(SiR^1R^2O)_z\ A \qquad \text{(IX)}$$

in which:

- $R^1$ is methyl or phenyl,
- $R^2$ is methyl, $C_2H_4CF_3$ or $C_2H_4C_4F_9$,
- $R_F$ is a linear or branched fluorinated alkylene group of the formula (II)

$$-(C_2H_2F_2)_t\ \text{-}(R^3CF\text{-}CF_2)_q\text{-}R'_F\text{-}(CF_2\text{-}CFR^3)_q.(C_2H_2F_2)_t\text{-} \qquad \text{(II)}$$

  in which :

  - $R^3$ is a fluorine atom or a trifluoromethyl,
  - $R'_F$ is a $(C_2\text{-}C_6)$perfluoroalkylene,
  - q and t are numbers such that the sum of all q and t is a number from 2 to 12,

- A is hydrogen or a group $-SiR^1R^{2a}R^{3a}$ in which $R^{2a}$ is a methyl, a vinyl or a $(C_3\text{-}C_6)$alkenyl and $R^{3a}$ is $R^1$, $R^2$ or a vinyl,
- m is 1, 2 or 3,
- n is 2 or 3,
- w is a number from 1 to 100, preferably from 1 to 20, and
- s and z are numbers such that $0 < \frac{s+z}{w} < 0.1$ and $\frac{s}{z}$ is preferably 2.

**14.** A dihydrosilane organosiloxane of formula (III)

$$HSiR^1R^2(OSiR^1R^2)_mH \qquad \text{(III)}$$

in which :

- $R^1$ is methyl or phenyl,
- $R^2$ is $C_2H_4CF_3$ or $C_2H_4C_4F_9$,
- m is 1, 2 or 3.

**15.** A method of preparing the organosiloxane of formula (III) as defined in claim 14 which comprises the oxidizing hydrolysis of a silane of formula $H_2SiR^1R^2$, in which $R^1$ and $R^2$ are as defined in claim 14, in the presence of a catalyst.

**16.** The method according to claim 15 in which the hydrolysis is catalyzed by $Pd/Al_2O_3$ in the presence of buffered $NaH_2PO_4$ aqueous solution.

**17.** A compound according to one of claims 1-3, 7-10 or 13, which is crosslinked.

**18.** A manufactured article made of a compound as defined in one of claims 1-3, 7-10, 13 or 17, which is selected from the group consisting of hoses, O-rings, seals, supported coatings, membranes and films.

**19.** A manufactured article made of a compound as defined in one of claims 1-3, 7-10, 13 or 17, which is a membrane or a binder for electrical batteries.

European Patent Office

# EUROPEAN SEARCH REPORT

Application Number
EP 99 40 2728

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 100 136 A (CARTER PHILIP L ET AL) 11 July 1978 (1978-07-11)<br>* column 8, line 18 - line 28 *<br>* claims * | 1,4-6, 17-19 | C08G77/50 |
| A<br>X | EP 0 665 270 A (DOW CORNING TORAY SILICONE) 2 August 1995 (1995-08-02)<br>* pages 4, 5, formulae *<br>* page 6, formulae *<br>* claims 1,12 * | 1,4-6<br>14 | |
| A | CHEMICAL ABSTRACTS, vol. 116, no. 14, 6 April 1992 (1992-04-06) Columbus, Ohio, US; abstract no. 130381, XP002134795<br>* abstract *<br>& JP 03 263340 A (KAO CORP) | 14 | |
| A | EP 0 520 287 A (SHINETSU CHEMICAL CO) 30 December 1992 (1992-12-30)<br>* pages 4, 5, formulae *<br>* page 6, line 29 - line 35 *<br>* claim * | 7,13, 17-19 | TECHNICAL FIELDS SEARCHED (Int.Cl.7)<br>C08G |

The present search report has been drawn up for all claims

| Place of search | Date of completion of the search | Examiner |
|---|---|---|
| BERLIN | 10 April 2000 | Hoepfner, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 40 2728

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2000

| Patent document cited in search report | Publication date | Patent family member(s) | Publication date |
|---|---|---|---|
| US 4100136 A | 11-07-1978 | US 4057566 A | 08-11-1977 |
| | | CA 1068718 A | 24-12-1979 |
| | | DE 2648242 A | 25-08-1977 |
| | | FR 2337731 A | 05-08-1977 |
| | | GB 1575416 A | 24-09-1980 |
| | | JP 1223419 C | 15-08-1984 |
| | | JP 56000829 A | 07-01-1981 |
| | | JP 58056582 B | 15-12-1983 |
| | | JP 1136055 C | 28-02-1983 |
| | | JP 52085123 A | 15-07-1977 |
| | | JP 57025037 B | 27-05-1982 |
| EP 0665270 A | 02-08-1995 | JP 7216092 A | 15-08-1995 |
| | | DE 69509144 D | 27-05-1999 |
| | | DE 69509144 T | 09-09-1999 |
| | | US 5484868 A | 16-01-1996 |
| JP 3263340 A | 22-11-1991 | JP 2051988 C | 10-05-1996 |
| | | JP 7087205 B | 20-09-1995 |
| EP 0520287 A | 30-12-1992 | JP 1961409 C | 25-08-1995 |
| | | JP 6049214 A | 22-02-1994 |
| | | JP 6092482 B | 16-11-1994 |

EPO FORM P0459

For more details about this annex : see Official Journal of the European Patent Office, No. 12/82